# EUROPEAN PATENT APPLICATION

(11) **EP 4 563 450 A1**
(43) Date of publication of application: **04.06.2025**
(21) Application number: 24215825.1
(22) Date of filing: 27.11.2024
(51) Int. Cl.: B62J 45/411, B62J 45/412, B62J 45/413, B62M 9/122, B62M 9/123, B62M 9/132, B62M 9/133, B62M 25/08, B62J 45/415

(54) **GEAR SHIFT CONTROL DEVICE, GEAR SHIFT CONTROL METHOD AND BICYCLE GEAR SHIFT SYSTEM**

(30) Priority: 28.11.2023 US 202363603121 P; 26.11.2024 TW 113145560
(71) Applicant: Darad Innovation Corporation, Taoyuan City 333 (TW)
(72) Inventor: Hsu, Po-Jen, 33341 Taoyuan City (TW); Yin, Chun-Hsiung, 33341 Taoyuan City (TW); Teng, Chao-Ching, 33341 Taoyuan City (TW)
(74) Representative: Straus, Alexander

(57) **Abstract**

A gear shift control device (10), for a bicycle gear shift system (20), includes an environmental sensing unit (101), configured to detect an environmental state and generate a first detection result; a pedal sensing unit (102), configured to detect a pedal state and generate a second detection result; and a processor (103), coupled to the environment sensing unit and the pedal sensing unit, configured to generate an adjustment signal according to the first detection result and the second detection result to adjust a gearing position of the bicycle gear shift system.

## Description

### Field of the Invention

The present invention relates to a gear shift control device, a gear shift control method and a bicycle gear shift system, and more particularly, to a gear shift control device, a gear shift control method and a bicycle gear shift system having an automatic gear shift function.

### Background of the Invention

When riding a bicycle, the cadence of the pedals and the timing of the shifting vary from rider to rider, and some riders may not be able to manually shift with the proper force, timing, or direction. Therefore, improper gear ratios may make the rider's pedaling less efficient. Today, automatic gear shift device for bicycles have been developed to simplify the rider's gear shift control and increase the rider's pedaling efficiency. For example, the shift timing of an automatic gear shift device is usually adjusted by reference to some information in the vehicle speed, pedaling frequency, pedaling torque or pedal force. However, the information is backward-looking and cannot be used to determine the immediacy of a rider's need to shift while riding. Therefore, how to determine the immediate demand for shifting or to predict the future demand for shifting has become one of the goals of the industry.

### Summary of the Invention

This in mind, the present invention aims at providing a gear shift control device, a gear shift control method and a bicycle gear shift system to solve the above problems.

This is achieved by a gear shift control device, a gear shift control method and a bicycle gear shift system according to the independent claims. The dependent claims pertain to corresponding further developments and improvements.

As will be seen more clearly from the detailed description following below, a claimed gear shift control device, for a bicycle gear shift system, includes an environmental sensing unit, configured to detect an environmental state and generate a first detection result; a pedal sensing unit, configured to detect a pedal state and generate a second detection result; and a processor, coupled to the environment sensing unit and the pedal sensing unit, configured to generate an adjustment signal according to the first detection result and the second detection result to adjust a gearing position of the bicycle gear shift system.

In another aspect, a claimed bicycle gear shift system includes a gear shift device; and a gear shift control device, coupled to the gear shift device, comprising: an environmental sensing unit, configured to detect an environmental state and generate a first detection result; a pedal sensing unit, configured to detect a pedal state and generate a second detection result; and a processor, coupled to the environment sensing unit and the pedal sensing unit, configured to generate an adjustment signal according to the first detection result and the second detection result to adjust a gearing position of the gear shift device.

In another aspect, a claimed gear shift control method, for a bicycle gear shift system, includes detecting an environmental state and generating a first detection result; detecting a pedal condition and generating a second detection result; and generating an adjustment signal according to the first detection result and the second detection result to adjust a gearing position of the bicycle gear shift system.

### Brief Description of the Drawings

FIG. 1 is a schematic diagram of a bicycle gear shift system according to an embodiment of the present invention.
FIG. 2 is a flow chart of a gear shift control method according to an embodiment of the present invention.
FIG. 3 is a schematic diagram of a bicycle gear shift system according to another embodiment of the present invention.
FIG. 4 is a schematic diagram of an algorithm according to an embodiment of the present invention.
FIG. 5 is a schematic diagram of an algorithm according to another embodiment of the present invention.
FIG. 6 is a schematic diagram of an algorithm according to another embodiment of the present invention.

### Detailed Description

Certain terms are used throughout the description and following claims to refer to particular components. As one skilled in the art will appreciate, hardware manufacturers may refer to a component by different names. This document does not intend to distinguish between components that differ in name but not function. In the following description and in the claims, the terms "include" and "comprise" are utilized in an open-ended fashion, and thus should be interpreted to mean "include, but not limited to". Also, the term "couple" is intended to mean either an indirect or direct electrical connection. Accordingly, if one device is coupled to another device, that connection may be through a direct electrical connection, or through an indirect electrical connection via other devices and connections.

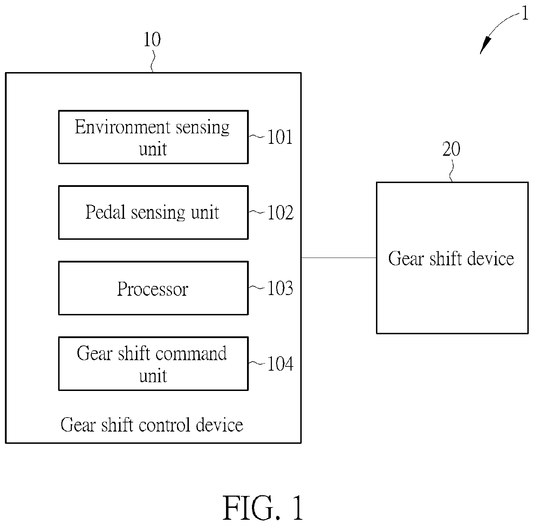

Please refer to FIG. 1. FIG. 1 is a schematic diagram of a bicycle gear shift system 1 according to an embodiment of the present invention. The bicycle gear shift system 1 includes a gear shift control device 10 and a gear shift device 20 coupled to each other, and the gear shift control device 10 may automatically adjust a gearing position of the gear shift device 20 to simplify the control of the rider's gearing and to increase the rider's pedaling efficiency.

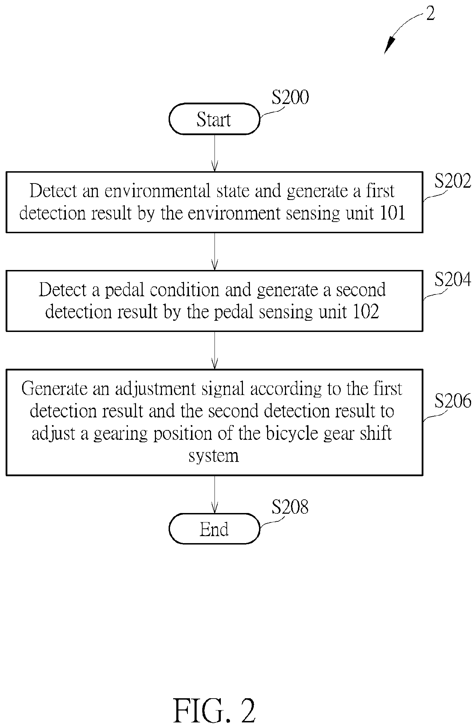

In detail, the gear shift control device 10 includes an environment sensing unit 101, a pedal sensing unit 102, and a processor 103. The environment sensing unit 101 is configured to detect an environmental state and generate a first detection result. The pedal sensing unit 102 is configured to detect a pedal state and generate a second detection result. The processor 103 is coupled to the environment sensing unit 101 and the pedal sensing unit 102, and the processor 103 may generate an adjustment signal to adjust the gearing position of the gear shift device 20 according to the first detection result and the second detection result. The operation of the processor 103 may be summarized in a gear shift control method 2, as shown in FIG. 2. The gear shift control method 2 includes the following steps:

| | |
|---|---|
| Step S200: | Start. |
| Step S202: | Detect an environmental state and generate a first detection result by the environment sensing unit 101. |
| Step S204: | Detect a pedal condition and generate a second detection result by the pedal sensing unit 102. |
| Step S206: | Generate an adjustment signal according to the first detection result and the second detection result to adjust a gearing position of the bicycle gear shift system. |
| Step S208: | End. |

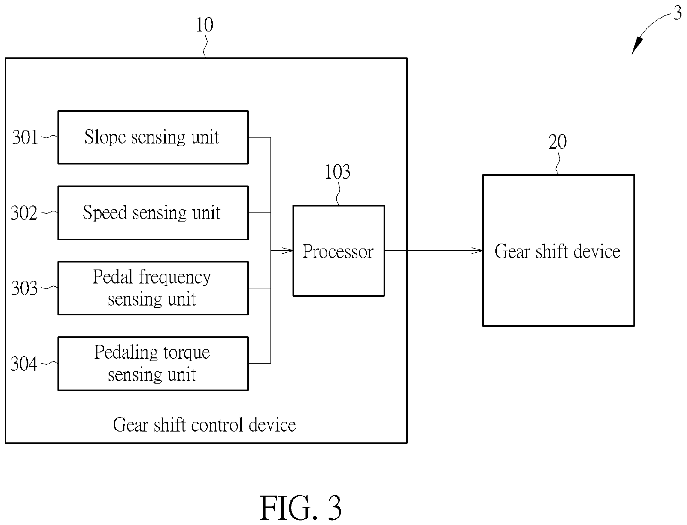

In short, according to the gear shift control method 2, the processor 103 may adjust the gearing position of the gear shift device 20 according to the environmental state and the pedal state. It should be noted that in steps S202 and S204, the environmental state may include an environmental terrain or a vehicle speed, and the pedal state may include a pedaling speed, a pedaling torque, or a pedal force, but not limited thereto. In addition, the environment sensing unit 101 and the pedal sensing unit 102 only represent the necessary components for detecting the environment state and the pedal state, and the basic structures are well known in the art and will not be repeated, and those skilled in the art may add other sensing units according to system requirements, such as a slope sensing unit, a pedal frequency sensing unit, an acceleration sensing unit, a Hall effect sensing unit, a gyroscope, and so forth, according to the needs, and are not limited thereto. For example, please refer to FIG. 3. FIG. 3 is a schematic diagram of a bicycle gear shift system 3 according to an embodiment of the present invention. The bicycle gear shift system 3 is derived from the bicycle gear shift system 1, so the same components are represented by the same symbols. The bicycle gear shift system 3 may include a slope sensing unit 301, a speed sensing unit 302, a pedal frequency sensing unit 303, and a pedaling torque sensing unit 304. The processor 103 may generate an adjustment signal according to the detection results of the slope sensing unit 301, the speed sensing unit 302, the pedal frequency sensing unit 303, and the pedaling torque sensing unit 304, to adjust the gearing position of the gear shift device 20. It should be noted that the slope sensing unit 301 corresponds to or is similar to the environment sensing unit 101 of the bicycle gear shift system 1, and the speed sensing unit 302, the tread frequency sensing unit 303, and the pedal torque sensing unit 304 correspond to or are similar to the pedal sensing unit 102 of the bicycle gear shift system 1. For convenience of illustration, the following are all described using the environment sensing unit 101 of the bicycle gear shift system 1 as the slope sensing unit 301 and the pedal sensing unit 102 as the pedal frequency sensing unit 303.

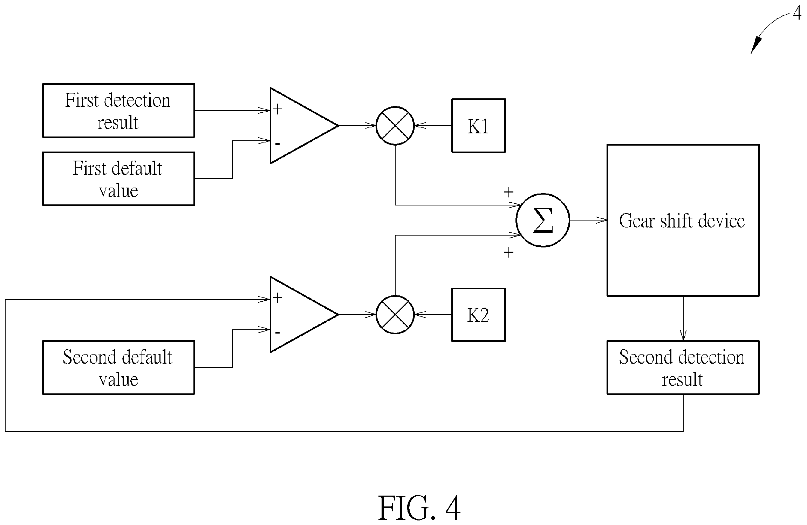

In step S206, in order to ensure that the rider rides the bicycle in a comfortable zone, the processor 103 may utilize various algorithms to process the first detection result and the second detection result and generate the adjustment signal, so that the processor 103 may adjust the gearing position of the bicycle gear shift system according to the adjustment signal. For example, please refer to FIG. 4. FIG. 4 is a schematic diagram of an algorithm 4 according to an embodiment of the present invention. In the algorithm 4, the processor 103 may perform the following steps: performing a subtraction operation on a first detection result and a first default value to generate a first difference value; performing a subtraction operation on a second detection result and a second default value to generate a second difference value; and generate the adjustment signal according to the first difference value and the second difference value. It should be noted that the first default value and the second default value correspond to the environmental state and the pedal state of the rider in the comfortable zone, respectively. For example, in the case where the environment sensing unit 101 is a slope sensing unit 301 and the pedal sensing unit 102 is a pedal frequency sensing unit 303, the first default value is a slope comfort value of the rider riding the bicycle and the second default value is a pedaling frequency comfort value of the rider riding the bicycle. In the way, the processor 103 may determine the difference between the current riding state of the rider and the comfortable zone, and generate the adjustment signal to adjust the gearing position up or down accordingly. For example, when the first difference value indicates that the rider is facing a harsh road condition with a greater slope, the processor 103 may generate the adjustment signal to downshift the gearing position, and conversely, when the first difference value indicates that the rider is facing a relaxed road condition with a lesser slope, the processor 103 may generate the adjustment signal to upshift the gearing position. Alternatively, when the second difference value indicates that the kinetic energy of the bicycle continues to increase, the rider's pedal frequency exceeds the comfortable zone, or the rider's pedal force demand increases, the processor 103 may generate the adjustment signal to adjust the gearing position upward, and conversely, when the second difference value indicates that the kinetic energy of the bicycle continues to decrease, the rider's pedal frequency does not reach the comfortable zone, or the rider's pedal force demand decreases, the processor 103 may generate the adjustment signal to adjust the gearing position downward.

In another embodiment, the present invention assigns a first weight K1 and a second weight K2 to the first difference value and the second difference value, respectively, so that the processor 103 may more accurately generate the adjustment signal to adjust the gearing position up or down. It should be noted that the first weight K1 and the second weight K2 may be positive or negative values, for example, the change in environmental slope (the first difference value) is negatively correlated with the gearing position, so the first weight K1 corresponding to the change in environmental slope is negative. The change in the rider's pedal frequency (the second difference value) is positively related to the gearing position, so the second weight K2 corresponding to the change in the rider's pedal frequency is positive. The calculation of the weights should be well known in the art and is not described in detail.

It should be noted that in another embodiment, the processor 103 may perform a pre-processing calculation of the first detection result or the second detection result in order to ensure real-time adjustment of the gearing position. For example, in the case where the environment sensing unit 101 is a slope sensing unit 301, the processor 103 may sample a plurality of environmental slope values while the rider is riding the bicycle in a current time zone and perform an averaging operation on the plurality of environmental slope values to obtain an average slope value as the first detection result. In this way, the processor 103 may instantly reflect changes in the environmental slope and more accurately generate the adjustment signal to adjust the gearing position up or down.

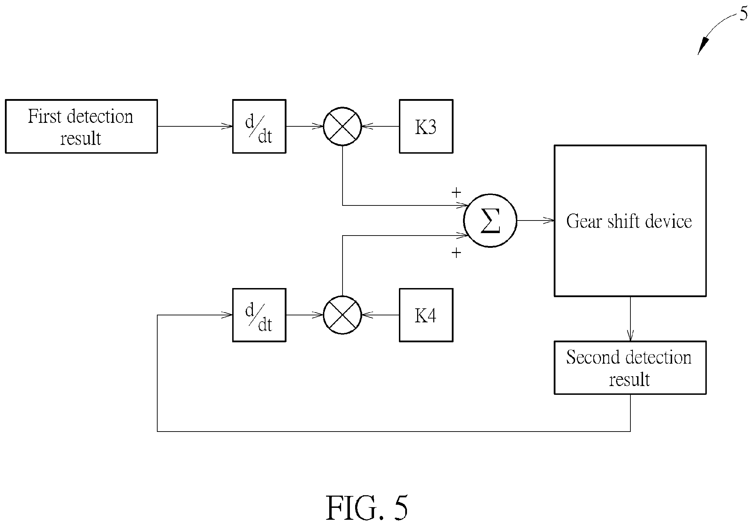

In another embodiment, the processor 103 may utilize other algorithms to process the first detection result and the second detection result and generate the adjustment signal. Please refer to FIG. 5. FIG. 5 is a schematic diagram of an algorithm 5 according to an embodiment of the present invention. In the algorithm 5, the processor 103 may perform the following steps: performing a differential operation on the first detection result to generate a first change rate; performing a differential operation on the second detection result to generate a second change rate; and generate the adjustment signal according to the first change rate and the second change rate. The first change rate and the second change rate correspond to an environmental change rate of an environmental state and a pedal change rate of a pedal state, respectively. For example, in the case where the environment sensing unit 101 is the slope sensing unit 301 and the stepping sensing unit 102 is the pedal frequency sensing unit 303, the first change rate is the slope change rate and the second change rate is the pedal frequency change rate. When the slope change rate or the pedal frequency change rate is larger, it means that the demand for gear shift of the bicycle ridden by the rider is larger, and conversely, when the slope change rate or the pedal frequency change rate is smaller, it means that the demand for gear shift of the bicycle ridden by the rider is smaller. In the way, the processor 103 may determine the current gear shift demand of the rider according to the first change rate and the second change rate, and generate the adjustment signal accordingly to adjust the gearing position up or down.

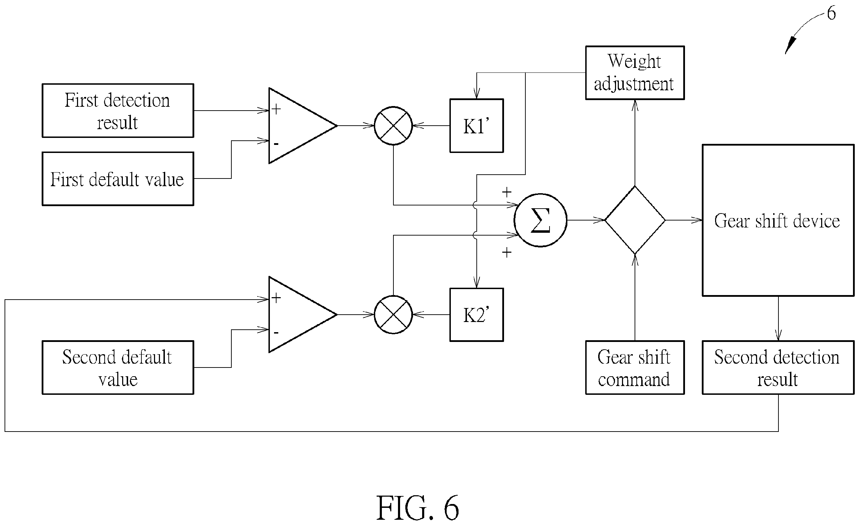

Furthermore, the bicycle gear shift system of the present invention may also accommodate the shifting preferences of the rider. Please refer to FIG. 1, the shift control device 10 may additionally include a gear shift command unit 104 coupled to the processor 103, which is configured to receive a gear shift command from the rider. The processor 103 may adjust the gearing position to more closely match the shift preferences according to the adjustment signal and the gear shift command. For example, please refer to FIG. 6. FIG. 6 is a schematic diagram of the algorithm 6 according to an embodiment of the present invention. In the algorithm 6, processor 103 may perform the following steps: adjusting a first weight corresponding to the first detection result according to the first detection result and the gear shift command; adjusting a second weight corresponding to the second detection result according to the second detection result and the gear shift command; and generate the adjustment signal according to the adjusted first weight, the adjusted second weight, the first detection result, and the second detection result. For example, in the case where the environment sensing unit 101 is a slope sensing unit 301 and the pedal sensing unit 102 is a pedal frequency sensing unit 303, the first default value is the slope comfort value for the rider riding the bicycle and the second default value is the pedal frequency comfort value for the rider riding the bicycle. In the way, the processor 103 may determine the difference between the current riding state of the rider and the comfortable zone, and compare the difference with the gear shift command to perform a weight adjustment algorithm on the first weight K1 and the second weight K2 to obtain the adjusted first weight K1' and the adjusted second weight K2'. In the way, the processor 103 may more accurately generate the adjustment signal to adjust the gearing position up or down, taking into account the shifting preferences of the rider. It should be noted that the weight adjustment algorithm may utilize a deep learning or reinforcement learning architecture to determine the adjusted first weight K1' and the adjusted second weight K2' that take into account the shifting preferences of the rider. It should be noted that the principles of deep neural networks are well known in the field and will not be repeated. In addition, deep learning methods or reinforcement learning methods may also use Deep Belief Networks (DBN), Convolutional Neural Networks (CNN) and Convolutional Deep Belief Networks (CDBN). Networks (CDBN), but not limited thereto.

It should be noted that the algorithm 4, the algorithm 5, and the algorithm 6 are only embodiments of the present invention, and may be adapted by those skilled in the art according to the system requirements. For example, the algorithm 6 is the algorithm 4 with the weight adjustment algorithm. Therefore, the algorithm of the present invention may also be the algorithm 5 with a weight adjustment algorithm. Alternatively, the algorithm of the present invention may combine the subtraction operation of the algorithm 4 and the differentiation operation of the algorithm 5 and assign different weights to the first difference value, the second difference value, the first change rate, and the second change rate, respectively, but not limited thereto.

It should be noted that the bicycle gear shift system 1 is the embodiment of the present invention. Those skilled in the art should readily make combinations, modifications and/or alterations on the abovementioned description and examples. The abovementioned description, steps, procedures and/or processes including suggested steps can be realized by means that could be hardware, software, firmware (known as a combination of a hardware device and computer instructions and data that reside as read-only software on the hardware device), an electronic system, or combination thereof. Examples of hardware can include analog, digital and mixed circuits known as microcircuit, microchip, or silicon chip. Examples of the electronic system may include a system on chip (SoC), system in package (SiP), a computer on module (CoM) and the computer system. Any of the abovementioned procedures and examples above may be compiled into program codes or instructions that are stored in a memory. The memory may include read-only memory (ROM), flash memory, random access memory (RAM), subscriber identity module (SIM), hard disk, or CD-ROM/DVD-ROM/BD-ROM, but not limited thereto. The processor 103 may read and execute the program codes or the instructions stored in the memory for realizing the abovementioned functions.

In summary, the bicycle gear shift system of the present invention detects environmental states and pedal states and automatically adjusts the gearing position of the gear shift device 20 according to the detection results to simplify the rider's shifting control and increase the rider's pedaling efficiency. In this way, compared to prior art, the bicycle gear shift system of the present invention may satisfy the immediate need for gear shifting or predict the future need for gear shifting.

## Claims

1. A gear shift control device, for a bicycle gear shift system, **characterized by** comprising:
an environmental sensing unit, configured to detect an environmental state and generate a first detection result;
a pedal sensing unit, configured to detect a pedal state and generate a second detection result; and
a processor, coupled to the environment sensing unit and the pedal sensing unit, configured to generate an adjustment signal according to the first detection result and the second detection result to adjust a gearing position of the bicycle gear shift system.

2. A bicycle gear shift system, **characterized by** comprising:
a gear shift device; and
a gear shift control device, coupled to the gear shift device, comprising:
an environmental sensing unit, configured to detect an environmental state and generate a first detection result;
a pedal sensing unit, configured to detect a pedal state and generate a second detection result; and
a processor, coupled to the environment sensing unit and the pedal sensing unit, configured to generate an adjustment signal according to the first detection result and the second detection result to adjust a gearing position of the gear shift device.

3. A gear shift control method, for a bicycle gear shift system, **characterized by** comprising:
detecting an environmental state and generating a first detection result;
detecting a pedal condition and generating a second detection result; and
generating an adjustment signal according to the first detection result and the second detection result to adjust a gearing position of the bicycle gear shift system.

4. The gear shift control device of claim 1, the bicycle gear shift system of claim 2 or the gear shift control method of claim 3, **characterized in that** the step of generating the adjustment signal by the processor according to the first detection result and the second detection result comprises:
generating the adjustment signal according to a first weight corresponding to the first detection result, a second weight corresponding to the second detection result, the first detection result and the second detection result.

5. The gear shift control device of claim 1, the bicycle gear shift system of claim 2 or the gear shift control method of claim 3, **characterized in that** the step of generating the adjustment signal by the processor according to the first detection result and the second detection result comprises:
differentiating the first detection result to generate a first change rate;
differentiating the second detection result to generate a second change rate; and
generating the adjustment signal according to the first change rate and the second change rate.

6. The gear shift control device of claim 1, the bicycle gear shift system of claim 2 or the gear shift control method of claim 3, **characterized in that** the step of generating the adjustment signal by the processor according to the first detection result and the second detection result comprises:
performing a subtraction operation on the first detection result and a first default value to generate a first difference value;
performing a subtraction operation on the second detection result and a second default value to generate a second difference value; and
generating the adjustment signal according to the first difference value and the second difference value.

7. The gear shift control device of claim 1 or the bicycle gear shift system of claim 2, **characterized by** further comprising:
a gear shift command unit, configured to receive a gear shift command from a user; and
wherein the processor is additionally coupled to the gear shift command unit to adjust the gearing position according to the adjustment signal and the gear shift command.

8. The gear shift control method of claim 3, **characterized by** further comprising:
receiving a gear shift command from a user; and
adjusting the gearing position according to the adjustment signal and the gear shift command.

9. The gear shift control device of claim 7, the bicycle gear shift system of claim 7 or the gear shift control method of claim 8, **characterized in that** the step of adjusting the gear shift according to the adjustment signal and the gear shift command comprises:
adjusting a first weight corresponding to the first detection result according to the first detection result and the gear shift command;
adjusting a second weight corresponding to the second detection result according to the second detection result and the gear shift command; and
generating the adjustment signal according to the adjusted first weight, the adjusted second weight, the first detection result and the second detection result.

10. The gear shift control device of claim 1, the bicycle gear shift system of claim 2 or the gear shift control method of claim 3, **characterized in that** the environmental state comprises an environmental terrain or a vehicle speed, and the pedal state comprises a pedaling speed, a pedaling torque, or a pedal force.
